Europäisches Patentamt

European Patent Office

Office européen des brevets

(19)

(11) Veröffentlichungsnummer: **0 033 842**
**B1**

(12) # EUROPÄISCHE PATENTSCHRIFT

(45) Veröffentlichungstag der Patentschrift:
**24.10.84**

(21) Anmeldenummer: **81100123.9**

(22) Anmeldetag: **09.01.81**

(51) Int. Cl.³: **H 02 J 3/18**, H 02 M 1/12,
H 02 P 13/30

(54) **Verfahren zur Minderung der Netzrückwirkungen eines netzgeführten Direktumrichters und Steuerschaltung hierzu.**

(30) Priorität: **23.01.80 DE 3002373**

(43) Veröffentlichungstag der Anmeldung:
**19.08.81 Patentblatt 81/33**

(45) Bekanntmachung des Hinweises auf die Patenterteilung:
**24.10.84 Patentblatt 84/43**

(84) Benannte Vertragsstaaten:
**BE CH DE FR GB IT LI NL SE**

(56) Entgegenhaltungen:
**CH - A - 502 011
DE - A - 2 201 800
DE - B - 2 244 757**

(73) Patentinhaber: **Siemens Aktiengesellschaft, Berlin und
München Wittelsbacherplatz 2, D-8000 München 2 (DE)**

(72) Erfinder: **Salzmann, Theodor, Leimberger Strasse 29,
D-8520 Erlangen (DE)**

ACTORUM AG

## Beschreibung

Die Erfindung betrifft ein Verfahren zur Minderung der Netzrückwirkungen eines an ein Drehstromnetz angeschlossenen netzgeführten Direktumrichters durch Aussteuerung eines an das Drehstromnetz angeschlossenen steuerbaren Blindleistungskompensators sowie eine Steuerschaltung zur Bildung des Sollwertes für die Aussteuerung des Blindleistungskompensators nach diesem Verfahren.

Drehstromnetze, insbesondere schwache Netze, reagieren auf die von angeschlossenen Umrichtern aufgenommene Blindleistung häufig mit erheblichen Spannungsschwankungen, die an anderen Verbrauchern zu Flickererscheinungen oder bei Resonanzstellen der Netzimpedanz zu Spannungsverzerrungen führen können. Durch Kondensatoren oder Filterkreise kann eine mittlere Blindleistung kompensiert werden. Es können ans Netz auch induktive oder kapazitive Speicher mit Steuereinrichtungen (z.B. gesteuerten Gleichstromstellern) angeschlossen werden, die durch einen überlagerten Blindleistungsregelkreis angesteuert werden und in der Lage sind, Blindleistung entsprechend der Umrichter-Blindleistungsaufnahme ins Netz einzuspeisen. Eine derartige Blindleistungsregelung mit den zugehörigen Messeinrichtungen ist jedoch verhältnismässig aufwendig und wegen der Zeitkonstanten in der Regel nur schlecht geeignet, auch die periodischen Modulationen der Blindleistungsaufnahme zu kompensieren, die bei derartigen Umrichtern in der Regel auftreten.

Es ist üblich, für Leistungsabschätzungen die arithmetischen Mittelwerte des Wirkstromes $i_W$ sowie des Blindstromes $i_Q$ während einer Halbperiode der Umrichter-Ausgangsfrequenz zu betrachten und daraus die konventionelle Scheinleistung zu bilden, die genauer als Grundschwingungsscheinleistung $S_1$ zu bezeichnen ist. Für die Dimensionierung von elektrischen Einrichtungen ist jedoch die Rechtleistung massgebend, die vom Effektivwert der modulierten Grundschwingung des Netzstromes während einer Halbperiode der Ausgangsfrequenz bestimmt ist und die stets um einen bestimmten Leistungsbetrag («Modulationsleistung») grösser ist als die Grundschwingungsscheinleistung. Bedingt durch das Umrichtverfahren ist die Blindleistungsaufnahme von Direktumrichtern stets mit einer vielfachen Frequenz der Direktumrichter-Ausgangsfrequenz moduliert. Die Folge ist eine Modulation des Netzstromes mit Oberschwingungs- und Unterschwingungsströmen. So erzeugt z.B. ein aus 6-pulsigen Teilumrichtern aufgebauter Direktumrichter mit Drehstromausgang wegen der genannten Blindleistungsmodulation neben dem netzfrequenten Blindstrom noch Seitenfrequenzen, die gegenüber der Netzfrequenz um das 6-fache Verhältnis von Ausgangsfrequenz zu Netzfrequenz verschoben sind. Bei Umrichtern mit einphasigem Ausgang ist sowohl die Wirkleistung als auch die Grundschwingungsblindleistung moduliert, so dass sich weitere Seitenfrequenzen ergeben. Das entsprechende Frequenzspektrum aus Seitenfrequenzen tritt auch für die weiteren von der Pulszahl der Umrichterschaltung abhängigen Oberschwingungen des Netzstromes auf, wobei jedoch meist die von diesen Oberschwingungen hervorgerufenen Netzrückwirkungen gering sind.

Der Erfindung liegt die Aufgabe zugrunde, die Grundschwingungsblindleistung und/oder deren Modulation ohne eine Regelung der Blindleistung und die zugehörigen Messeinrichtungen zu kompensieren. Dadurch fallen auch die Zeitkonstanten der üblichen Blindleistungsregelungen weg, so dass die Kompensation schneller vorgenommen werden kann.

Dies wird erreicht durch eine Aussteuerung eines an das Drehstromnetz angeschlossenen steuerbaren Blindleistungskompensators gemäss den kennzeichnenden Merkmalen des Anspruchs 1. Danach wird der Sollwert für die Steuerung des vom Blindleistungskompensator zu liefernden Blindstromes aus dem Produkt vom Betrag des Direktumrichter-Ausgangsstromes und einer vorgegebenen Funktion des Direktumrichter-Steuerwinkels $\psi$ gebildet wird, und zwar unabhängig vom Ist-Wert des netzseitigen Blindstromes selbst. Der Direktumrichter-Steuerwinkel kann dabei aus der Direktumrichter-Ausgangsspannung oder aus der Steuerspannung des Direktumrichters abgeleitet werden, z.B. kann bei entsprechender Proportionalität zwischen Steuerspannung und Steuerwinkel direkt die Steuerspannung als Steuerwinkel bzw. als die in das Produkt eingehende Funktion des Steuerwinkels verwendet werden.

Der Erfindung liegt dabei die Erkenntnis zugrunde, dass es für die Aussteuerung des ins Netz einzuspeisenden, kompensierenden Blindstromes genügt, einen Sollwert $i_B^*$ anzugeben, der aufgrund theoretischer Betrachtungen über den Grundschwingungsblindstrom und idealisierender Annahmen aus der Formel

$$i_B^* = k \cdot |i_A^*| \cdot \cos \psi \qquad (1)$$

berechnet wird. Hierbei ist k ein Proportionalitätsfaktor, $/i_A/$ der Absolutbetrag des Direktumrichter-Ausgangsstromes und $\psi$ der Steuerwinkel, wenn dieser so gewählt ist, dass sich für $\psi = (\pm) 90°$ die volle positive (negative) Amplitude der Direktumrichter-Ausgangsspannung ergibt. Werden die Stromrichterventile so angesteuert, dass die Steuerspannung proportional diesem Steuerwinkel ist, so kann die Steuerspannung direkt anstelle des Wertes $\psi$ in eine entsprechende Rechenschaltung zur Verwirklichung der Gleichung (1) verwendet werden.

Für netzgeführte Direktumrichter besteht ein Zusammenhang zwischen der Umrichterausgangsspannung $u_A$, der ideellen Lehrlaufgleichspannung $U_{di\,o}$ und dem Steuerwinkel $\psi$, so dass sich $\psi$ aus

$$\psi = \arcsin (u_A/U_{di\,o}) \qquad (2)$$

berechnen lässt.

In der Regel ist für die Steuerung des Direktumrichters ein Regelkreis vorgesehen, bei dem die Steuerspannung $U_{st}$ der Direktumrichter-Ventile aus den Istwerten des Ausgangsstromes $i_A$ bzw. der Ausgangsspannung $U_A$ und einem Strom-Sollwert $i_A^*$ gebildet wird. Die Eingangsgrössen für die Gleichung (1) liegen also in Form entsprechender Sollwerte $i_A^*$ und $\psi$ (bzw. $U_{st}$) bereits vor. Jedoch kann es vorteilhaft sein, einen der Sollwerte oder beide Sollwerte durch die entsprechenden Istwerte $i_A$ und $U_A$ unter Zuhilfenahme von Gleichung (2) zu verwenden.

Nach der Erfindung kann die Bildung des Sollwertes für die Aussteuerung des Blindleistungskompensators vorteilhaft durch eine Steuerschaltung mit einem vom Istwert oder Sollwert des Direktumrichter-Ausgangsstromes beaufschlagten Betragsbildner, einem von einer dem Direktumrichter-Steuerwinkel $\psi$ entsprechenden Grösse beaufschlagten Funktionsbildner und einem von den Ausgangsgrössen des Betragsbildners und des Funktionsbildners beaufschlagten Multiplizierglied berechnet werden. Diese Steuerschaltung stellt somit eine Rechenschaltung für die Gleichung (1) dar und ihre Ausgangsgrösse kann direkt oder über eine nachgeordnete Mittelwertschaltung, die noch erläutert werden wird, als Stellgrösse für den zu liefernden Kompensationsbindstrom $i_B$ verwendet werden.

Sofern anstelle von $\psi$ in Gleichung (1) die Ausgangsspannung $u_A$ entsprechend Gleichung (2) verwendet wird, ist dem Funktionsbildner ein zweiter Funktionsbildner vorzuschalten, dem die Ausgangsspannung des Direktumrichters aufgeschaltet ist und dessen Kennlinie dem Zusammenhang zwischen Steuerwinkel und Ausgangsspannung entspricht.

Häufig tritt der Fall auf, dass die von mittleren Blindstrom (gemittelt über eine Periode der Ausgangsfrequenz) hervorgerufene Netzrückwirkung für das Netz selbst und für andere am Netz angeschlossene Verbraucher nicht kritisch ist, oder dass die Grundschwingungsblindleistung nicht in voller Höhe kompensiert zu werden braucht oder aus wirtschaftlichen Gründen kompensiert werden soll, jedoch die von der Modulation der Blindleistung hervorgerufenen Seitenfrequenzen der Rückwirkungsfrequenzen unterdrückt werden sollen. In diesem Fall wird vorteilhaft als Sollwert $i_B^*$ nicht der volle entsprechend Gleichung (1) berechnete Wert des vom Direktumrichter aufgenommenen Blindstromes verwendet, sondern nur dessen Abweichung $\Delta i_{Q1}$ von einem entsprechenden Mittelwert $\bar{i}_{Q1}$. Dieser Mittelwert kann direkt aus dem entsprechend Gleichung (1) bereits berechneten Wert $i_{Q1}$ durch Glättung gebildet werden. Da $i_A$ und $u_A$ sich jedoch ungefähr sinusförmig mit der Umrichterausgangsfrequenz ändern und somit in vektorieller Darstellung als umlaufende Vektoren der Länge $\bar{i}_A$ und $\bar{u}_A$ dargestellt werden können, kann der Mittelwert für $\bar{i}_{Q1}$ nach Gleichung 1 auch dadurch berechnet werden, dass die entsprechenden Beträge $\bar{i}_A$ und $\bar{u}_A$ bzw. $\bar{\psi}$ entsprechend Gleichung (2) dieser umlaufenden Vektoren in Gleichung (1) eingesetzt werden. Dabei wird als Produkt-Mittelwert $\bar{i}_{Q1}$ das Produkt aus den über wenigstens eine Netzfrequenz-Halbschwingung gemittelten Direktumrichter-Ausgangsstrom und der Funktion des entsprechend gemittelten Direktumrichter-Steuerwinkels berechnet.

Obwohl eine volle Kompensation der Blindleistung vor allem bei Umrichtern mit Drehstromausgang häufig nicht wirtschaftlich möglich ist, kann jedoch eine vollkommene Kompensation der Modulationsleistung wünschenswert sein. In diesem Fall wird für die Bildung des Sollwertes $i_B^*$ zu der soeben berechneten Differenz $\Delta i_{Q1}$, die zur vollkommenen Kompensation der Modulationsleistung führt, der Wert $\bar{i}_{Q1}$ des Produkt-Mittelwertes selbst mit einer entsprechenden Gewichtung addiert. Diese Gewichtung kann z.B. darin bestehen, dass für niedere Werte für $\bar{i}_{Q1}$ dieser Wert voll aufgeschaltet wird, durch eine entsprechende Schwellwertbegrenzung jedoch ab einem bestimmten Maximalwert $\bar{i}_{Q1\,max}$ nur noch der Wert dieser maximal zu kompensierenden Grundleistungsblindschwingung aufgeschaltet wird.

Bei Direktumrichtern mit einphasigem Ausgang pulsiert auch die Wirkleistung mit doppelter Ausgangsfrequenz. In diesem Fall ist es vorteilhaft, als steuerbaren Blindleistungskompensator einen Kompensator zu verwenden, der auch Leistungspulsationen kompensieren kann, z.B. eine drehfelderregte Schleifringläufermaschine, die ein Schwungrad antreibt. Zur Steuerung des vom Kompensator zu liefernden Wirkstromes wird dabei vorteilhaft ein Rechenwert $i_w$ verwendet, der proportional dem Produkt $|i_A| \cdot \sin \psi$ berechnet wird. Der Sollwert für den Wirkleistungsmodulations-Kompensationsstrom wird dann als Differenz zwischen diesem Rechenwert $i_w$ und einem entsprechendem Mittelwert $\bar{i}_w$ gebildet.

Diese und weitere vorteilhafte Ausführungsformen der Erfindung sind in den Ansprüchen näher gekennzeichnet.

Anhand von mehreren Ausführungsbeispielen und 7 Figuren wird die Erfindung näher erläutert. Es zeigen:

Figur 1 eine Anordnung mit einem an ein dreiphasiges Drehstromnetz angeschlossenen Direktumrichter mit einphasigen Ausgang, einer steuerbaren Kompensationseinrichtung und einer aus einer Rechenschaltung und einer Mittelwertschaltung bestehenden Steuerschaltung zur Bildung des Sollwertes für die Aussteuerung des Blindleistungskompensators mit den Eingangsgrössen $\bar{i}_A^*$ und $U_{St}$,

Figur 2 eine Rechenschaltung und eine Mittelwertschaltung mit den Istwerten $i_A$ und $u_A$ als Eingangsgrössen,

Figur 3 eine Schaltung zur gewichteten Aufschaltung von $\bar{i}_{Q1}$ zur Differenz $i_{Q1}$,

Figur 4 und 5 Steuerschaltungen für die Kompensation von Wirkleistungsmodulationen bei Direktumrichtern mit einphasigem Ausgang,

Figur 6 eine Ausführung der Steuerschaltung für den Fall, dass ans Netz ein Direktumrichter mit dreiphasigem Ausgang angeschlossen ist, und

Figur 7 eine Variante der Mittelwertschaltung bei einer Steuerschaltung nach Figur 6.

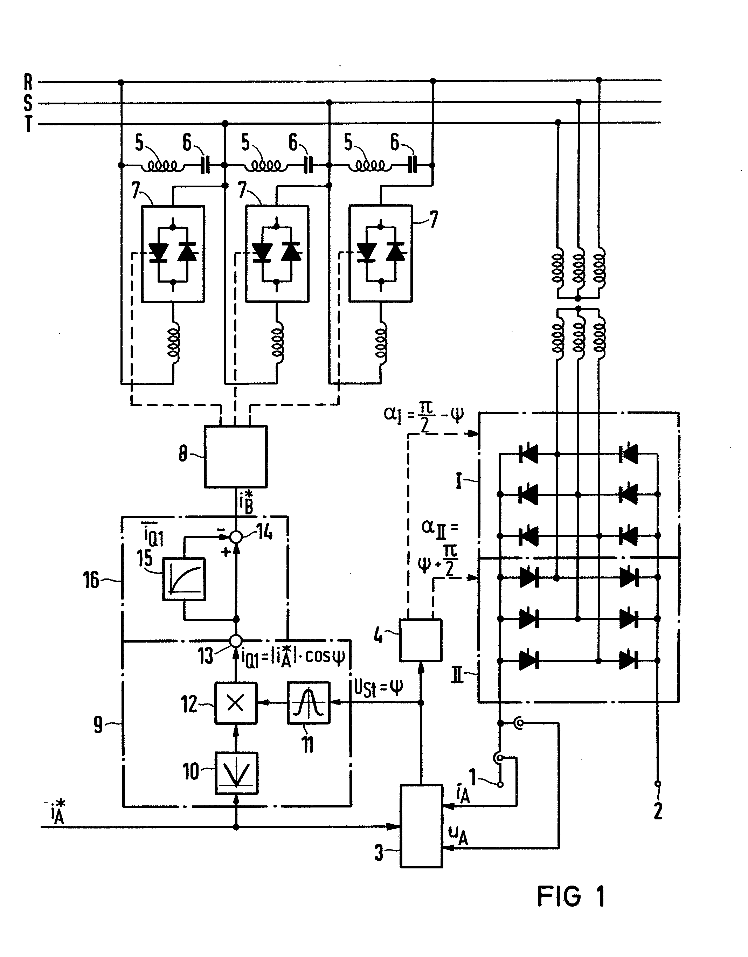

Gemäss Figur 1 ist an ein Drehstromnetz R, S, T ein Direktumrichter mit einphasigem Ausgang angeordnet, der aus den beiden antiparallelen Teilstromrichtern I, II besteht. An den Umrichterausgängen 1, 2 wird die Ausgangsspannung $u_A$ und der Ausgangsstrom $i_A$ erfasst und einer Regeleinrichtung 3 zugeführt, die entsprechend einem vorgegebenen Stromsollwert $i_A^*$ eine Steuerspannung $U_{St}$ ermittelt, die einem Steuersatz 4 zugeführt wird. Dieser Steuersatz 4 ist so ausgelegt, dass Proportionalität zwischen der Steuerspannung $U_{St}$ und dem Steuerwinkel $\psi$ besteht. Von den Ausgangsimpulsen des Steuersatzes 4 werden die Ventile des Stromrichters I mit einem Zündwinkel $\alpha_i = \pi/2 - \psi$ bzw. bei Vorzeichenumkehr die Ventile des Stromrichters II mit dem Zündwinkel $\alpha_{II} = \psi + \pi/2$ angesteuert.

Zwischen die Netzphasen R, S, T sind Speicher aus Induktivitäten 5 und Kapazitäten 6 angeordnet, die über induktiv belastete Gleichstromsteller 7 zur Kompensation des vom Direktumrichter I, II aufgenommenen Blindstromes in das Netz entladen werden können. Zur Steuerung dieses Blindstromkompensators 5, 6, 7 dient eine Blindstromsteuereinrichtung 8, die die Zündimpulse für die Ventile der Gleichstromsteller 7 liefert.

Zur Bildung des Sollwertes $i_B^*$, auf den die Blindstromsteuereinrichtung 8 den vom Blindstromkompensator 5, 6, 7 einzuspeisenden Blindstrom steuert, ist eine Rechenschaltung 9 vorgesehen, die die Gleichung (1) nachbildet. Diese Steuerschaltung enthält einen Betragsbildner (Gleichrichter) 10, der von einer dem Ausgangsstrom $i_A$ entsprechenden elektrischen Grösse beaufschlagt ist. Dazu kann der am Ausgang 1 erfasste Istwert $i_A$ verwendet werden; bei einer hinreichend schnellen Regeleinrichtung 3 kann jedoch, wie in Figur 1 dargestellt ist, vorteilhaft auch der entsprechende Sollwert $i_A^*$ verwendet werden. Ferner ist ein Funktionsgeber 11 vorgesehen, der mit der Steuerspannung $U_{St}$ (in diesem Fall gleichbedeutend mit dem Steuerwinkel $\psi$) beaufschlagt ist und dessen Ausgangsgrösse cos $\psi$ entspricht. Die Ausgangsgrössen dieser beiden Elemente 10, 11 werden einem Multiplizierglied 12 aufgeschaltet, an dessen Ausgang 13 entsprechend Gleichung (1) eine theoretisch bestimmte Grösse für den Grundschwingungsblindstrom $i_{Q1}$ abgegriffen werden kann.

Dieser Wert $i_{Q1}$ kann direkt als Sollwert für den zu liefernden Blindstrom $i_B$ im Steuersatz 8 zugeführt werden. Beim Ausführungsbeispiel nach Figur 1 sind die Speicher 5, 6 jedoch nicht zur Kompensation der gesamten Netzrückwirkungen des Direktumrichters ausgelegt, vielmehr soll lediglich die Modulationsleistung kompensiert werden, während die Grundschwingungsblindleistung unkompensiert bleibt. Daher wird als Sollwert $i_B^*$ die Differenz $\Delta i_{Q1}$ zwischen dem theoretischen Wert $i_{Q1}$ für den momentanen Blindleistungsstrom und dem Mittelwert $\bar{i}_{Q1}$ des Grundschwingungsblindstromes gebildet. Hierzu ist dem Ausgang 13 ein Differenzglied 14 nachgeschaltet, das vom Ausgang 13 her mit dem Wert $i_{Q1}$ und mit umgekehrtem Vorzeichen von dem über das Glättungsglied 15 am Ausgang 13 abgegriffenen Mittelwert $\bar{i}_{Q1}$ beaufschlagt ist. Diese Mittelwertschaltung 14, 15 ist auf eine grosse Glättung ausgelegt, um eine geringe Restwelligkeit des Mittelwertes $\bar{i}_{Q1}$ zu erzeugen (Zeitkonstante mehrere Netzperioden). Dies bedingt jedoch eine grosse Einstellzeit bei Änderungen des Mittelwertes.

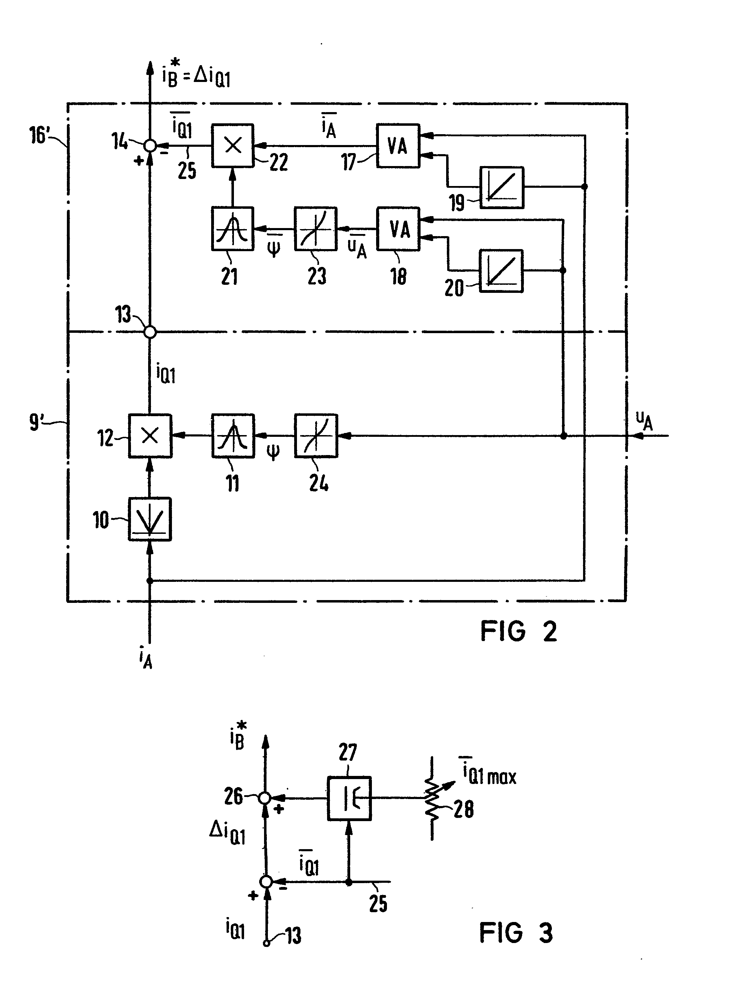

Vorteilhaft wird daher eine in Figur 2 gezeigte Mittelwertschaltung 16' verwendet, die auf der Überlegung basiert, dass die Grössen $i_A$ und $u_A$ zeitlich sich sinusartig ändernde Grössen sind, so dass sie jeweils in einem rechtwinkeligen Koordinatensystem als die eine Komponente eines umlaufenden Vektors der Länge (des Betrages) $\bar{i}_A$ und $\bar{u}_A$ aufgefasst werden können. Die Rechenschaltung 16' geht daher von den Eingangsgrössen $i_A$ und $u_A$ aus, wobei für den Fall, dass analog Figur 1 anstelle von $u_A$ die Steuerspannung $U_{St} = \psi$ zur Verfügung steht, dem entsprechenden Eingang für $u_A$ ein weiterer Funktionsbildner vorgeschaltet wird, der den Zusammenhang $u_A = U_{di\,o} \cdot$ sin $\psi$ entsprechend Gleichung (2) aus der $\psi/u_A$ Kennlinie des Direktumrichters nachbildet.

Die Berechnung der Mittelwerte $\bar{i}_A$ und $\bar{u}_A$ geschieht nun durch vektorielle Auswertung mittels Vektoranalysatoren 17, 18, denen jeweils als eine Komponente die Eingangsgrössen $i_A$ und $u_A$ aufgeschaltet werden, während die anderen, dazu senkrechten Komponenten aus diesen Eingangsgrössen mittels Integratoren 19, 20 abgeleitet werden. Die Berechnung des Mittelwertes $\bar{i}_{Q1}$ geschieht nun, indem die Grösse $\bar{u}_A$ in einem Funktionsbildner 23 entsprechend der $\psi/u_A$-Kennlinie des Direktumrichters in den Steuerwinkel-Mittelwert $\bar{\psi}$ überführt und sodann mittels eines Winkelfunktionsgebers 21 und eines Multipliziergliedes 22 die entsprechende Gleichung $\bar{i}_{Q1} = \bar{i}_A \cdot$ cos $\bar{\psi}$ gebildet wird.

Entsprechend dem in Figur 2 gezeigten Fall, dass als Eingangsgrösse für die Mittelwertschaltung 16' die Direktumrichter-Ausgangsspannung $u_A$ verwendet wird, kann diese Eingangsgrösse auch für die Rechenschaltung 9' verwendet werden, wobei lediglich dem Funktionsbildner 11 ein dem Funktionsbildner 23 entsprechender Funktionsbildner 24 zur Überführung der Eingangsspannung $u_A$ in den Steuerwinkel $\psi$ vorgeschaltet wird.

Soll nun abweichend von Figur 1 nicht die gesamte mittlere Grundschwingungsblindleistung unkompensiert bleiben, sondern diese mittlere Grundschwingungsblindleistung bis zu einem Maximalwert kompensiert und lediglich diesen Maximalwert übersteigende Blindleistungen unkompensiert bleiben, so ist entsprechend Figur 3 vorgesehen, dem die Grösse $\Delta i_{Q1}$ liefernden Ausgang der Mittelwertschaltung 16 bzw. 16' eine Additionsstelle 26 nachzuschalten, der der über die Leitung 25 am Ausgang des Glättungsgliedes 15 bzw. Multiplizergliedes 22 abgegriffene Wert für $\bar{i}_{Q1}$ entsprechend gewichtet aufgeschaltet wird. Diese Gewichtung kann über einen Schwellwertbegrenzer 27 geschehen, dessen begrenzender Schwellwert z.B. über ein Potentiometer 28 einstellbar ist.

Wie bereits erwähnt wurde, pulsiert bei einem Direktumrichter mit einphasigem Ausgang, wie er in Figur 1 gezeigt ist, auch die Wirkleistung. Diese Wirkleistungspulsation kann kompensiert werden, wenn der verwendete Kompensator auch für derartige Kompensationen ausgelegt ist. Für die modulierte Wirkkomponente des Netzstromes wird gemäss der Erfindung analog zu Gleichung (1) angesetzt

$$i_w = k \cdot | i_A | \cdot \sin \psi, \qquad (3)$$

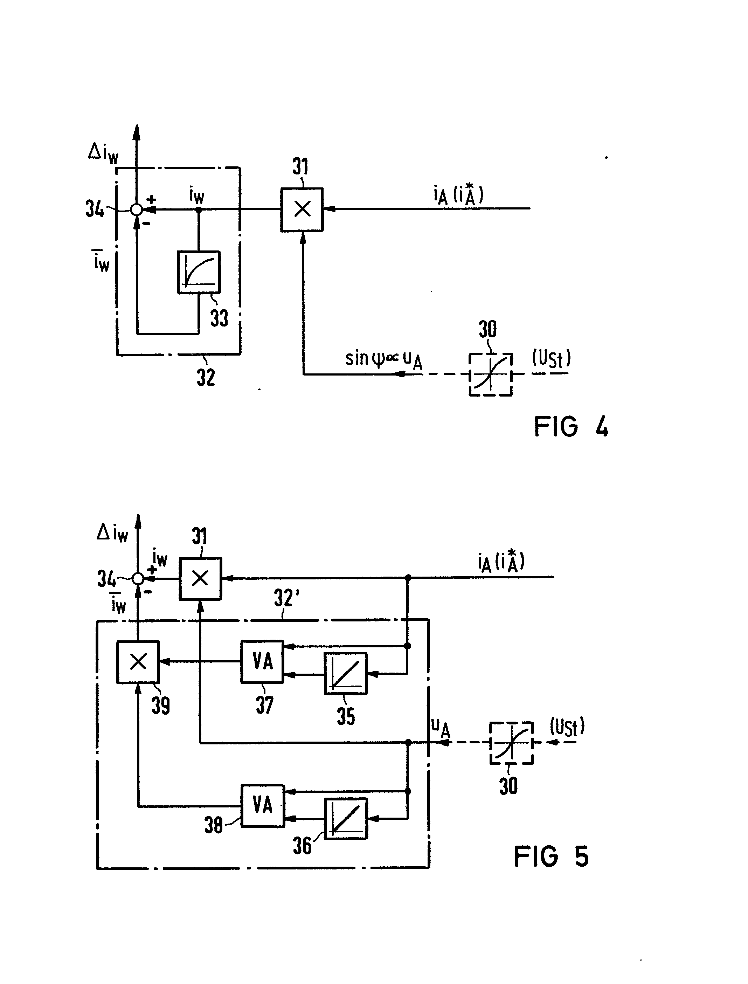

wobei bei Verwendung geeigneter Steuersätze wiederum $\psi$ proportional $U_{St}$ und $u_A$ proportional $\sin \psi$ zu setzen ist. Zur Nachbildung der Gleichung (3) kann daher wiederum neben dem Umrichterausgangsstrom $i_A$ bzw. dessen Sollwert $i_A^*$ von der Spannung $u_A$ bzw. über einen vorgeschalteten Winkelfunktionsgeber 30 (Figur 4) von der Steuerspannung $U_{St}$ ausgegangen werden. Um die pulsierende rechnerische Wirkstromkomponente des Netzstromes entsprechend der Gleichung (3) nachzubilden, ist es dann lediglich erforderlich, die Grössen $i_A$ und $u_A$ einem Multiplizierglied 31 zuzuführen. Als Sollwert für die Wirkstromaussteuerung kann nun wiederum die rechnerisch nachgebildete Pulsation $\Delta i_w = i_w - \bar{i}_w$ verwendet werden, die in einer dem Multiplizierglied 31 nachgeschalteten Mittelwertschaltung 32 gebildet werden, die analog zur Mittelwertschaltung 16 aus Figur 1 aus einem Glättungsglied 33 und einer Verknüpfungsstelle 34 besteht. Die Mittelwertbildung kann jedoch auch in einer Mittelwertschaltung 32' entsprechend Figur 5 ermittelt werden, die analog zur Mittelwertschaltung 16' in Figur 2 durch vektorielle Auswertung über Integratoren 35, 36 und Vektoranalysatoren 37, 38 die Mittelwerte $\bar{i}_A$ und $u_A$ und über ein Multiplizierglied 39 den Mittelwert $\bar{i}_w = \bar{i}_A \sin \bar{\psi}$ bildet.

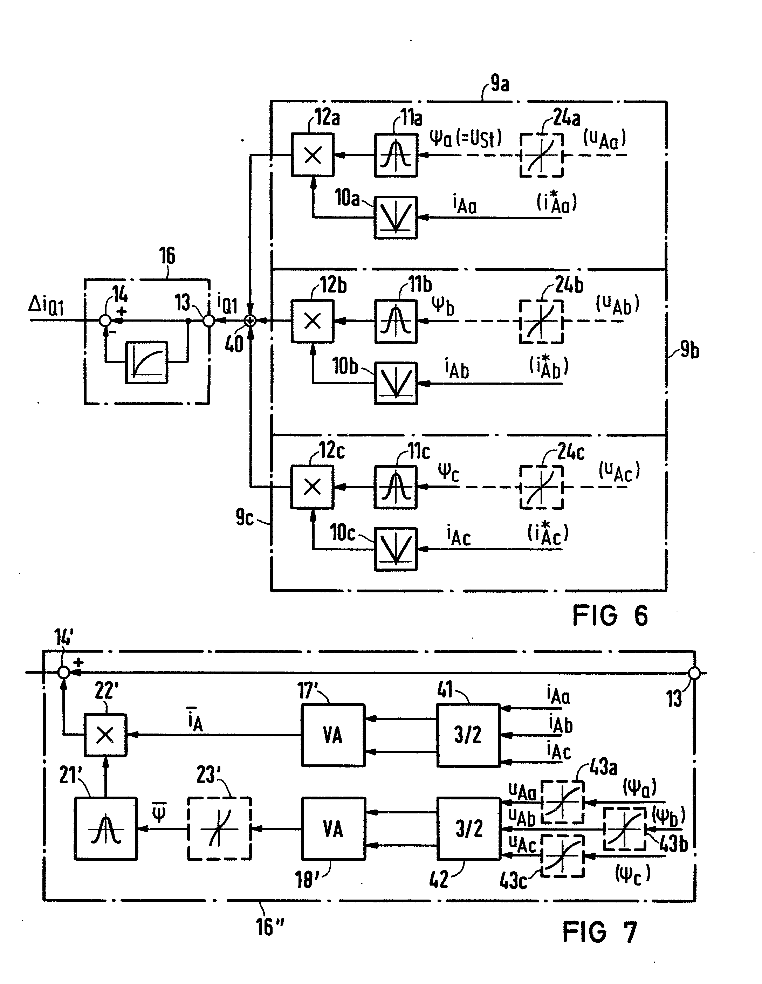

Die Rechenschaltungen 9 bzw. 9' lassen sich auch für Direktumrichter mit mehrphasigem Ausgang verwenden. In Figur 6 ist eine derartige Schaltung für einen dreiphasigen Direktumrichter angegeben. Dabei ist für jeden Phasenausgang a, b und c jeweils eine Rechenschaltung 9a, 9b bzw. 9c vorgesehen, der im Fall von Figur 1 der entsprechende Phasenausgangsstrom $i_{Aa}$ bzw. $i_{Ab}$ bzw. $i_{Ac}$ (oder deren Sollwert $i_{Aa}^*$ bzw. $i_{Ab}^*$ bzw. $i_{Ac}^*$) und der Steuerwinkel $\psi_a$ bzw. $\psi_b$ bzw. $\psi_c$ (oder im Fall der Figur 2 über einen entsprechenden Funktionswandler 24a bzw. 24b bzw. 24c die Phasenausgangsspannung $U_{Aa}$ bzw. $U_{Ab}$ bzw. $U_{Ac}$) zugeführt werden. Jede dieser Rechenschaltungen enthält auch in diesem Fall jeweils einen Betragsbildner 10a bzw. 10b bzw. 10c, einen Winkelfunktionsbildner 11a, 11b bzw. 11c und ein Multiplizierglied 12a bzw. 12b bzw. 12c. Die Ausgangsgrössen der Multiplizierglieder 12a, 12b, 12c werden an einer Additionsstelle 40 zum theoretischen Wert für den Grundschwingungsblindstrom $i_{Q1}$ zusammengesetzt.

Soll dieser Wert $i_{Q1}$ nicht als Sollwert für die Kompensation der gesamten Grundschwingungsblindleistung, sondern nur für die Kompensation der Modulationsleistung verwendet werden, so kann dem Ausgang 13 auch hier eine Mittelwertschaltung 16 analog zu Figur 1 nachgeschaltet sein. Es lässt sich aber auch hier eine Mittelwertbildung durch vektorielle Auswertung der Eingangsgrössen durchführen, wie in Figur 7 gezeigt ist. Zur Bildung des Mittelwertes $\bar{i}_A$ ist dabei der Vektoranalysator 17' vorgesehen, dem die Komponenten des Ausgangsstromvektors $i_A$ in einem rechtwinkeligen Koordinatensystem zugeführt werden. Da der Stromvektor $i_A$ sich aus den drei Phasenströmen $i_{Aa}$, $i_{Ab}$ und $i_{Ac}$ zusammensetzt, ist dem Vektoranalysator 17' ein Koordinatenwandler 41 vorgeschaltet. Der Mittelwert $\bar{\psi}$ wird ebenfalls analog zu Figur 2 dadurch gebildet, dass die Phasenausgangsspannung $u_{Aa}$, $u_{Ab}$, $u_{Ac}$ über einen Koordinatenwandler in die beiden Komponenten des Spannungsvektors $u_A$ bezüglich eines rechtwinkeligen Koordinatensystems umgewandelt werden, im Vektoranalysator 18' aus den beiden Komponenten der Betrag des Vektors gebildet und dieser in einem Funktionsbildner 23' in den Steuerwinkel-Mittelwert $\bar{\psi}$ umgewandelt werden. Sollen anstelle der Phasenausgangsspannungen $u_{Aa}$, ... die entsprechenden Steuerwinkel $\psi_a$, ... bzw. Steuerspannungen $U_{St\,a}$, ... verwendet werden, so können die Steuerspannungen bzw. Steuerwinkel durch den entsprechenden Eingängen des Koordinatenwandlers 42 vorgeschaltete Funktionswandler 43a, 43b, 43c entsprechend der Proportionalität zwischen $U_{Aa}$ und $\psi_A$, $U_{Ab}$ und $\psi_b$ und $U_{Ac}$ und $\psi_c$ umgewandelt werden. Die Kennlinien der Funktionsbildner 43a, 43b und 43c einerseits und des Funktionsbildners 23' andererseits sind invers zueinander; diese Funktionsbildner sind in Figur 7 nur gestrichelt eingezeichnet, da es sich nämlich zeigt, dass ein gleichzeitiges Weglassen dieser Funktionsbildner praktisch zu keinem Fehler führt.

Da ferner häufig für die Regelung der Direktumrichter-Aussteuerung bereits Koordinatenwandler 41, 42 und Vektoranalysatoren 17', 18' zur Bildung von $\bar{i}_A$ und $\bar{u}_A$ vorgesehen sind, ergibt sich hiermit die Möglichkeit, ohne eine Blindleistungsregelung mit zugehörigen Messeinrichtungen die Grundschwingungsblindleistung und ihre Modulation mit geringem Aufwand zu kompensieren.

**Patentansprüche**

1. Verfahren zur Minderung der Netzrückwirkungen eines an ein Drehstromnetz (R, S, T) angeschlossenen netzgeführten Direktumrichters (I, II) durch Aussteuerung eines an das Drehstromnetz angeschlossenen steuerbaren Blindleistungskompensators (5, 6, 7), dadurch gekennzeichnet, dass der Sollwert ($i_B^*$) für die Steuerung (8) des vom Blindleistungskompensator zu liefernden Blindstromes unabhängig von dem Istwert des Blindstromes aus dem Produkt ($| i_A | \cdot \cos \psi = i_{Q1}$) vom Betrag des Direktumrichter-Ausgangsstromes ($i_A$) und einer aus der Steuerspannung ($U_{St}$) des Direktumrichters (I, II) oder der Direktumrichter-Ausgangsspannung ($U_a$) abgeleiteten vorgegebenen Funktion ($\cos \psi$) des Direktumrichter-Steuerwinkels $\psi$ gebildet wird (Figur 1).

2. Verfahren nach Anspruch 1, dadurch gekennzeichnet, dass als Sollwert ($i_B^*$) die Differenz ($\Delta i_{Q1}$, Differenzglied 14) zwischen dem Produkt ($|i_A| \cdot \cos \psi = i_{Q1}$) und einem entsprechenden Produkt-Mittelwert ($\bar{i}_{Q1}$) berechnet wird (Figur 1).

3. Verfahren nach Anspruch 2, dadurch gekennzeichnet, dass der Produkt-Mittelwert ($\bar{i}_{Q1}$) durch Glättung (15) der dem Produkt ($|i_A| \cdot \cos \psi$) entsprechenden elektrischen Grösse ($i_{Q1}$) gebildet wird (Figur 1).

4. Verfahren nach Anspruch 2, dadurch gekennzeichnet, dass der Produkt-Mittelwert ($\bar{i}_{Q1}$) als Produkt (Multiplizierglied 22) aus dem über eine Halbschwingung der Umrichterausgangsfrequenz gemittelten Betrag des Direktumrichter-Ausgangsstroms ($\bar{i}_A$) und der vorgegebenen Funktion ($\cos \bar{\psi}$) des entsprechend gemittelten Direktumrichter-Steuerwinkels $\bar{\psi}$ berechnet wird (Figur 2).

5. Verfahren nach Anspruch 4, dadurch gekennzeichnet, dass die gemittelten Grössen ($\bar{i}_A$, $\bar{\psi}$) als Betrag der ungemittelten Grössen in vektorieller Darstellung berechnet werden (Vektoranalysatoren 17, 18, Figur 2).

6. Verfahren nach einem der Ansprüche 2 bis 5, dadurch gekennzeichnet, dass für die Sollwertbildung zur Differenz ($\Delta i_{Q1}$) aus Produkt und Produktmittelwert der Produktmittelwert ($\bar{i}_{Q1}$) gewichtet addiert wird (Figur 3).

7. Verfahren nach Anspruch 1 zur gleichzeitigen Verringerung von Leistungspulsationen bei einem Direktumrichter mit einphasigem Ausgang, dadurch gekennzeichnet, dass ein auch zum Kompensieren von Modulationen des Wirkstromes ausgelegter, steuerbarer Kompensator verwendet wird, das Produkt ($|i_A| \cdot \sin \psi = i_w$) aus dem Direktumrichter-Ausgangsstrom-Betrag und einer vorgegebenen Funktion ($\sin \psi$) des Direktumrichter-Steuerwinkels berechnet wird und die Differenz ($\Delta i_w$) aus dem Produkt ($i_w$) und einem Produktmittelwert ($\bar{i}_w$) als Sollwert für die Steuerung des vom Kompensator zu liefernden Wirkstromes gebildet wird (Figur 4 und 5).

8. Steuerschaltung zur Bildung des Sollwertes für die Aussteuerung des Blindleistungskompensators bei dem Verfahren nach einem der Ansprüche 1 bis 7, gekennzeichnet durch eine Rechenschaltung (9) mit einem vom Istwert ($i_A$) oder Sollwert ($i_A^*$) des Direktumrichter-Ausgangsstromes beaufschlagten Betragsbildner (10), einem von einer dem Direktumrichter-Steuerwinkel $\psi$ entsprechenden Grösse beaufschlagten Funktionsbildner (11) mit vorgegebener Funktionskennlinie und einem von den Ausgangsgrössen des Betragsbildners und des Funktionsbildners beaufschlagten Multipliziergliedes (12) zur Produktbildung (Figur 1).

9. Steuerschaltung nach Anspruch 8, dadurch gekennzeichnet, dass zur Bildung der vorgegebenen Funktion ($\cos \psi$) des Direktumrichter-Steuerwinkels $\psi$ dem Funktionsbildner (11) ein zweiter Funktionsbildner (24) vorgeschaltet ist, dem die Ausgangsspannung des Direktumrichters aufgeschaltet ist und dessen Kennlinie dem Zusammenhang zwischen Steuerwinkel und Ausgangsspannung des Direktumrichters entspricht (Figur 2).

10. Steuerschaltung nach Anspruch 8 oder 9, gekennzeichnet durch eine der Rechenschaltung (9, 9') nachgeschaltete Mittelwertschaltung (16, 16'), die aus der Ausgangsgrösse ($i_{Q1}$; Figur 1) oder den Eingangsgrössen ($i_A$, $u_A$; Figur 2) der Rechenschaltung einen Produkt-Mittelwert bildet und ein von der Rechenschaltung und dem Produkt-Mittelwert beaufschlagtes Differenzglied (14) enthält.

11. Steuerschaltung nach einem der Ansprüche 8 bis 10 für einen Direktumrichter mit mehrphasigem Ausgang, dadurch gekennzeichnet, dass für jede Phase (a, b, c) eine Rechenschaltung (9a, 9b, 9c) mit einem vom Ausgangsstrom ($i_{Aa}$, $i_{Ab}$, $i_{Ac}$) dieses Direktumrichter-Phasenausgangs beaufschlagten Betragsbildner (10a, 10b, 10c), einem von einer dem Steuerwinkel ($\psi_a$, $\psi_b$, $\psi_c$) der auf diesen Phasenausgang arbeitenden Teilumrichter entsprechenden Spannung beaufschlagten Funktionsbildner (11a, 11b, 11c) und einem von den Ausgangsgrössen des Betragsbildners und des Funktionsbildners beaufschlagten Multiplizierglied (12a, 12b, 12c) vorgesehen ist, und dass die Ausgangsgrössen der Rechenschaltungen (9a, 9b, 9c) einem Additionsglied (40) aufgeschaltet sind (Figur 6).

12. Steuerschaltung nach einem der Ansprüche 8 bis 10 zur Steuerung eines auch auf das Kompensieren von Modulationen des Wirkstromes bei Verwendung eines Direktumrichters mit einphasigem Ausgang ausgelegten Blindstromkompensators, dadurch gekennzeichnet, dass für die Aussteuerung des zu liefernden Wirkstromes ein Multiplizierglied (31) für den Direktumrichter-Ausgangsstrom ($i_A$ bzw. $i_A^*$) und die Direktumrichter-Ausgangsspannung ($U_A$) oder die Ausgangsgrösse ($\sin \psi$) eines vom Steuerwinkel ($\psi$ bzw. $U_{St}$) beaufschlagten Funktionsbildners vorgesehen ist, und dass die Ausgangsgrösse ($i_w$) des Multipliziergliedes (31) und eine in einer Mittelwertschaltung (32, 32') gebildete, entsprechende gemittelte Multiplizierglied-Ausgangsgrösse ($\bar{i}_w$) einem Differenzglied (34) aufgeschaltet ist, an dessen Ausgang der Sollwert ($\Delta i_w$) für den zu liefernden Kompensationswirkstrom abgegriffen ist (Figur 4 und 5).

**Claims**

1. A method for reducing main feedback from a line-commutated direct converter (I, II) when connected to a three-phase mains supply (R, S, T), by modulating a controllable reactive power compensator (5, 6, 7) connected to the three-phase mains, characterised in that the theoretical value ($i_B^*$) for the control (8) of the reactive current to be supplied by the reactive power compensator is formed independently of the actual value of the reactive current, from the product ($|i_A| \cdot \cos \psi = i_{Q1}$) of the amount of the direct converter output current ($i_A$) and a predetermined function ($\cos \psi$) of the direct converter control angle ($\psi$) derived from the control voltage ($U_{ST}$) of the direct converter (I, II) or from the direct converter output voltage ($U_a$) (Figure 1).

2. A method as claimed in Claim 1, characterised in that the difference ($\Delta i_{Q1}$, difference element 14) between the product ($|i_A| \cdot \cos \psi$ $i_{Q1}$) and a corresponding mean value product ($\bar{i}_{Q1}$) is calculated as the theoretical value ($i_B^*$) (Figure 1).

3. A method as claimed in Claim 2, characterised in that the mean value product ($\bar{i}_{Q1}$) is formed by smoothing (15) the electrical value ($i_{Q1}$) which corresponds to the product ($|i_A| \cdot \cos \psi$) (Figure 1).

4. A method as claimed in Claim 2, characterised in that the mean value product ($\bar{i}_{Q1}$) is calculated as the product (multiplier 22) of the amount of the direct converter output current ($\bar{i}_A$), averaged over one half cycle of the converter output frequency, and the predetermined function ($\cos \bar{\psi}$) of the correspondingly averaged direct converter control angle ($\bar{\psi}$) (Figure 2).

5. A method as claimed in Claim 4, characterised in that the averaged values ($\bar{i}_A$, $\bar{\psi}$) are calculated as the amount of the unaveraged values in a vectorial representation (vector analysers 17, 18) (Figure 2).

6. A method as claimed in one of Claims 2 to 5, characterised in that for the formation of the theoretical value, the mean value product ($\bar{i}_{Q1}$) is added with weighting to the difference ($\Delta i_{Q1}$) of the product and the mean value product (Figure 3).

7. A method as claimed in Claim 1 for the simultaneous reduction of power pulsations in a direct converter having a single-phase output, characterised in that a controllable compensator is used which is also designed to compensate modulation of the active current, the product ($|i_A| \cdot \sin \psi = i_w$) of the direct converter output current amount and a predetermined function ($\sin \psi$) of the direct converter control angle is calculated, and the difference ($\Delta i_w$) of the product ($i_w$) and a mean value product ($\bar{i}_w$) is formed as a theoretical value for the control of the active current to be supplied by the compensator (Figures 4 and 5).

8. A control circuit for the formation of the theoretical value for the modulation of the reactive power compensator in a method as claimed in one of Claims 1 to 7, characterised by a calculating circuit (9) with an amount forming device (10) supplied with the actual value ($i_A$) or the theoretical value ($i_A^*$) of the direct converter output current, with a function forming device (11) supplied with a value corresponding to the direct converter control angle ($\psi$) and which possesses a predetermined function curve, and with a multiplier (12) for product formation which is supplied with the output values of the amount forming device and the function forming device (Figure 1).

9. A control circuit as claimed in Claim 8, characterised in that for the formation of the predetermined function ($\cos \psi$) of the direct converter control angle ($\psi$), the function forming device (11) is preceded by a second function forming device (24) connected to the output voltage of the direct converter and whose curve corresponds to the relationship between the control angle and the output voltage of the direct converter (Figure 2).

10. A control circuit as claimed in Claim 8 or 9, characterised by a mean value circuit (16, 16′) which is connected following the calculating circuit (9, 9′) and which forms a mean value product from the output value ($i_{Q1}$; Figure 1) or the input values ($i_A$, $U_A$; Figure 2) of the calculating circuit and which contains a difference element (14) which is influenced by the calculating circuit and the mean value product.

11. A control circuit as claimed in one of Claims 8 to 10 for a direct converter having a multi-phase output, characterised in that for each phase (a, b, c) a calculating circuit (9a, 9b, 9c) is provided having an amount forming device (10a, 10b, 10c) supplied with the output current ($i_{Aa}$, $i_{Ab}$, $i_{Ac}$) of this direct converter phase output, having a function forming device (11a, 11b, 11c) influenced by a voltage corresponding to the control angle ($\psi_a$, $\psi_b$, $\psi_c$) of the subsidiary converter which acts upon this phase output, and having a multiplier (12a, 12b, 12c) which is influenced by the output values of the amount forming and the function forming device, and that the output values of the calculating circuits (9a, 9b, 9c) are connected to an addition element (40) (Figure 6).

12. A control circuit as claimed in one of Claims 8 to 10 for the control of a reactive current compensator which is also designed to compensate modulations of the active current in the use of a direct converter having a single-phase output, characterised in that for the modulation of the active current which is to be supplied a multiplier (31) is provided for the direct converter output current ($i_A$ or $i_A^*$) and the direct converter output voltage ($U_A$) or the output value ($\sin \psi$) of a function forming device which is influenced by the control angle ($\psi$ or $U_{ST}$), and that the output value ($i_w$) of the multiplier (31) and an appropriately averaged multiplier output value ($\bar{i}_w$), formed in a mean value circuit (32, 32′), is connected to a difference element (34) from whose output is tapped the theoretical value ($\Delta i_w$) for the compensation active current which is to be supplied (Figures 4 and 5).

**Revendications**

1. Procédé pour réduire les réactions provoquées dans le réseau par un convertisseur direct du courant alternatif (I, II), raccordé à un réseau triphasé (R, S, T) et commandé par le réseau, par modulation d'un compensateur de puissance réactive (5, 6, 7) pouvant être commandé et qui est raccordé au réseau triphasé, caractérisé le fait que la valeur de consigne ($i_B^*$) pour la commande (8) du courant réactif devant être fourni par le compensateur de la puissance réactive est formée indépendamment de la valeur réelle du courant réactif, par le produit ($|i_A| \cdot \cos \psi = i_{Q1}$) de la valeur du courant de sortie ($i_A$) du convertisseur direct par une fonction ($\cos \psi$) de l'angle de commande ($\psi$) du convertisseur direct, prédéterminée, dérivée de la tension de commande ($U_{St}$) ou

de la tension de sortie ($U_a$) du convertisseur direct (I, II).

2. Procédé suivant la revendication 1, caractérisé par le fait que l'on calcule comme valeur de consigne ($i^{*}_B$) la différence ($\Delta i_{Q1}$, circuit différentiateur 14) entre le produit ($|i_A| \cos \psi = i_{Q1}$) et une valeur moyenne correspondante du produit ($\bar{i}_{Q1}$) (figure 1).

3. Procédé suivant la revendication 2, caractérisé par le fait que la valeur moyenne du produit ($\bar{i}_{Q1}$) est formée par lissage (15) de la grandeur électrique ($i_{Q1}$) correspondant au produit ($|i_A| \cdot \cos \psi$) (figure 1).

4. Procédé suivant la revendication 2, caractérisé par le fait que la valeur moyenne du produit ($\bar{i}_{Q1}$) est calculée sous la forme du produit (circuit multiplicateur 22) de la valeur moyenne du courant de sortie du convertisseur direct ($\bar{i}_A$), établie sur une alternance de la fréquence de sortie du convertisseur, par la fonction prédéterminée ($\cos \bar{\psi}$) de la moyenne correspondante de l'angle $\bar{\psi}$ de commande du convertisseur direct (figure 2).

5. Procédé suivant la revendication 4, caractérisé par le fait que les grandeurs moyennes ($\bar{i}_A$, $\bar{\psi}$) sont calculées en tant que valeurs des grandeurs, non moyennes, dans la représentation vectorielle (analyseurs vectoriels 17, 18, figure 2).

6. Procédé suivant l'une des revendications 2 à 5, caractérisé par le fait que pour la formation de la valeur de consigne on ajoute de façon pondérée la moyenne du produit ($\bar{i}_{Q1}$) à la différence ($\Delta i_{Q1}$) entre le produit et sa valeur moyenne (figure 3).

7. Procédé suivant la revendication 1 pour réduire simultanément des pulsations de puissance dans un convertisseur direct de courant alternatif possédant une sortie monophasée, caractérisé par le fait qu'on utilise un compensateur pouvant être commandé, agencé de manière à compenser également des modulations du courant efficace, que l'on calcule le produit ($|i_A| \cdot \sin \psi = i_w$) à partir de la valeur du courant de sortie du convertisseur direct et d'une fonction prédéterminée ($\sin \psi$) de l'angle de commande de ce convertisseur et que l'on forme la différence ($\Delta i_w$) entre le produit ($i_w$) et une valeur moyenne du produit ($\bar{i}_w$) en tant que valeur de consigne pour la commande du courant efficace devant être délivré par le compensateur (figures 4 et 5).

8. Circuit de commande pour la formation de valeur de consigne pour la modulation du compensateur de puissance réactive lors de la mise en œuvre du procédé suivant l'une des revendications 1 à 7, caractérisé par un circuit de calcul (9) comportant un dispositif de formation de valeurs (10) chargé par la valeur réelle ($i_A$) ou la valeur de consigne ($i^{*}_A$) du courant de sortie du convertisseur direct, un dispositif de formation de fonctions (11) chargé par une grandeur correspondant à l'angle $\psi$ (de commande du convertisseur direct) et comportant une courbe caractéristique de fonction, prédéterminée, et un circuit multiplicateur (12) chargé par les grandeurs de sortie du dispositif de formation de valeurs et le dispositif de formation de fonction et servant à former le produit (figure 1).

9. Circuit de commande suivant la revendication 8, caractérisé par le fait que pour former la fonction prédéterminée ($\cos \psi$) de l'angle ($\psi$) de commande du convertisseur direct, en amont du dispositif de formation de fonctions (11) se trouve branché un second dispositif de formation de fonctions (24) auquel est envoyée la tension de sortie du convertisseur direct et dont la courbe caractéristique correspond à la relation entre l'angle de commande et la tension de sortie du convertisseur direct (figure 2).

10. Circuit de commande suivant la revendication 8 ou 9, caractérisé par un circuit de formation de la valeur moyenne (16, 16') branché en aval du circuit de calcul (9, 9') et qui forme une valeur moyenne du produit à partir de la grandeur de sortie ($i_{Q1}$; figure 1) ou des grandeurs d'entrée ($i_A$, $u_A$; figure 2) du circuit de calcul et contient un circuit différentiateur (14) chargé par le circuit de calcul et par la valeur moyenne du produit.

11. Circuit de commande suivant l'une des revendications 8 à 10 pour un convertisseur direct du courant alternatif possédant une sortie polyphasée, caractérisé par le fait que pour chaque phase (a, b, c) il est prévu un circuit de calcul (9a, 9b, 9c) comportant un dispositif de formation de valeurs (10a, 10b, 10c) chargé par le courant de sortie ($i_{Aa}$, $i_{Ab}$, $i_{Ac}$) de cette sortie de phase du convertisseur direct, un dispositif de formation de fonctions (11a, 11b, 11c) chargé par une tension correspondant à l'angle de commande ($\psi_a$, $\psi_b$, $\psi_c$) du convertisseur partiel travaillant sur cette sortie de phase, et un circuit multiplicateur (12a, 12b, 12c) chargé par les grandeurs de sortie du dispositif de formation de valeurs et du dispositif de formation de fonctions, et que les grandeurs de sortie des circuits de calcul (9a, 9b, 9c) sont envoyées à un organe additionnel (40) (figure 6).

12. Circuit de commande suivant l'une des revendications 8 à 10 pour la commande d'un compensateur du courant réactif agencé également pour réaliser la compensation de modulations du courant efficace dans le cas de l'utilisation d'un convertisseur direct du courant alternatif possédant une sortie monophasée, caractérisé par le fait que pour la modulation du courant efficace devant être délivré, il est prévu un circuit multiplicateur (31) pour le courant de sortie ($i_A$ ou $i^{*}_A$) du convertisseur direct et pour la tension de sortie ($U_A$) du convertisseur direct ou les grandeurs de sortie ($\sin \psi$) d'un dispositif de formation de fonctions chargé par l'angle de commande ($\psi$ ou $U_{St}$), et que la grandeur de sortie ($i_w$) du circuit multiplicateur (R) et la moyenne correspondante d'une grandeur de sortie ($\bar{i}_w$) du circuit multiplicateur, formée dans un circuit de formation de la valeur moyenne (32, 32'), est envoyée à un circuit différentiateur (34) sur la sortie duquel est prélevée la valeur de consigne ($\Delta i_w$) pour le courant réactif de compensation devant être délivré (figures 4 et 5).

**FIG 1**

FIG 2

FIG 3

0 033 842

FIG 4

FIG 5

13

FIG 6

FIG 7

15